(19) 

Europäisches
Patentamt
European
Patent Office
Office européen
des brevets

(11) **EP 1 857 498 A1**

(12) **EUROPEAN PATENT APPLICATION**

(43) Date of publication:
**21.11.2007 Bulletin 2007/47**

(21) Application number: **06114108.1**

(22) Date of filing: **17.05.2006**

(51) Int Cl.:
*C08J 7/04* (2006.01)     *C08J 7/12* (2006.01)
*B05D 3/10* (2006.01)     *B05D 3/14* (2006.01)
*B65D 81/24* (2006.01)     *B65D 81/28* (2006.01)

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicants:
• **VLAAMSE INSTELLING VOOR
TECHNOLOGISCH ONDERZOEK
(VITO)
2400 Mol (BE)**
• **VTT Technical Research Centre of Finland
02044 VTT Espoo (FI)**

(72) Inventors:
• **PAULUSSEN, Sabine
2018, ANTWERPEN (BE)**
• **VANGENEUGDEN, Dirk
3630, MAASMECHELEN (BE)**
• **VARTIAINEN, Jari
00730, HELSINKI (FI)**
• **RÄTTÖ, Marjaana
01690, VANTAA (FI)**
• **HURME, Eero
02230, ESPOO (FI)**

(74) Representative: **pronovem
Office Van Malderen
Ave. Josse Goffin 158
1082 Brussels (BE)**

(54) **Anti-microbial material with reduced oxygen permeability**

(57)     The present invention is related to a material having at least one surface on which chitosan has been immobilised so as to be substantially resistant to leaching and having a strong anti-microbial activity as well as reduced oxygen permeability. The material may be a metal or a polymer such as a biaxially orientated polypropylene film. According to the process of the invention, chitosan is immobilised on a surface by applying a solution containing chitosan and a cross-linker to a material which has been functionalized in an atmospheric pressure dielectric barrier discharge by plasma activation or thin film deposition.

**Description**

**Field of the Invention**

The present invention is related to anti-microbial materials with reduced oxygen permeability, more particularly to polymeric materials and metals for use in active food packaging systems and for medical applications.

**State of the art**

Active food packaging systems can effectively control the microbial contamination of various solid and semisolid foodstuffs by inhibiting the growth of micro-organisms on the surface of the food, which normally comes into direct contact with the packaging material. In medical applications, anti-microbial materials can prevent colonisation of harmful bacteria onto surfaces which are used in medical treatments, as such improving hygiene associated with these treatments.

Chitosan, the β-1-4-linked polymer of 2-amino-2-deoxy-β-D-glucan, is prepared by N-deacetylation of chitin, the second most abundant natural biopolymer after cellulose. Chitosan is an edible biodegradable material, which has anti-microbial activity against different groups of micro-organisms, both bacteria, yeasts and moulds. Chitosan has been used in forming laminates for use in food packaging. Films and membranes have been formed from solutions of chitosan in acid solutions.

Document EP0369787 describes the preparation of a membrane, for the separation of a water-alcohol mixed liquid by the pervaporation method, the membrane being composed of a chitosan having a molecular weight of 80,000 to 150,000 and a deacetylation degree adjusted to 80 to 95% prepared by dissolving a chitosan in an acidic aqueous solution to form a dope having the chitosan concentration of 9 to 12% by weight, shaping the dope into a membrane and immersing the membrane in an alkaline solution.

Document US6,746,762 claims a film selectively permeable to carbon dioxide gas for food packaging comprising a laminate film comprising at least three layers composed of an outer layer, an intermediate layer and an inner layer, wherein the outer layer and the inner layer comprise a thermoplastic resin and the intermediate layer comprises a chitosan having a degree of deacetylation of 70 mol %.. Thus when used in a packaging laminate for foodstuffs, the chitosan film is protected from any contact with the foodstuff. Furthermore in the coating method disclosed in US6,746,762, the chitosan film obtained after drying is treated with an alkaline aqueous solution, for example dipping it in an aqueous sodium hydroxide solution (for example, dipping it in an aqueous 1 N sodium hydroxide solution for 0.5 seconds to 48 hours), and then washing it with water (for example, in tap water for 1 second to 1 hour) to obtain a film made of chitosan which is insoluble in water. This washed film must then be subjected to a further drying step.

Document JP-A-62138767 describes a method for obtaining a plastic surface coated with polysaccharide by means of adding a cross-linking agent. The plastic is treated with a corona for increasing the wettability of the plastic. There is no specific chemical functionalization of the plastic involved, the corona treatment is necessary to have a good distribution of the reactive polysaccharide/cross-linking agent mixture on the plastic. Document JP-A-2002297559 describes a method for coating a surface with an aqueous solution of a chitosan based compound. The surface is treated with a low pressure plasma.

It is know that treatment of polymers with atmospheric pressure dielectric barrier discharge plasmas enables a specific type of surface engineering of material properties which would normally only be accessible by vacuum plasma techniques, to be performed without the need for vacuum equipment. Although in the downstream afterglow of an atmospheric dielectric barrier discharge plasma, the degree of excitation for the species generated by the atmospheric plasma will be reduced, there are enough active species to cause specific surface modifications (J.Phys. D: Appl Phys. 34 (2001) 2761-6768).

Atmospheric plasma treatment in a "modified atmosphere" is very similar to traditional corona treatment with the exception that gases other than air as well as chemical precursors are injected into the corona discharge which enables modifications of the substrate that cannot be achieved in a corona treatment. Corona treatment is performed to enhance the wettability and adhesion of materials. Some materials are less reactive to a traditional corona and require this special treatment. Creating a high surface density of amino- or carboxylic groups onto surfaces by corona treatment is not possible without damaging the substrate.

PCT-application PCT/BE2005/00164 (not yet published) is related to a process for immobilizing chitosan, by activating a hydrophobic polymer film in an atmospheric pressure DBD-plasma, in the presence of either nitrogen/ammonia or $CO_2$.

**Summary of the invention**

The present invention is related to a process and product as described in the appended claims. The process of the invention comprises the steps of modifying a material surface by means of directed chemical surface functionalization using an atmospheric pressure dielectric barrier discharge plasma or its downstream afterglow prior to the coating of the substrate material with a solution comprising chitosan, so as to obtain immobilised chitosan on the substrate. The invention is equally related to a material on which chitosan has been immobilised. The direct functionalization takes place by introducing gases, such as $N_2$, air, He, Ar, $CO_2$ or mixture of these gases, possibly with reactive gasses such as, $H_2$, $O_2$, $SF_6$, $CF_4$, saturated and unsaturated hydrocarbon gases and/or fluorinated hydrocarbon gases added, with vapours added, or with aerosols of chemicals added, into the plasma discharge zone. A specific functionalization of the surface can thus be realized with the atmospheric pressure dielectric barrier discharge technique. In this invention all gas, vapour and/or aerosol mixtures which can introduce amino-or carboxylic acid groups onto surfaces can be used. These amino- or carboxylic acid groups can in turn react with one reactive part of the cross-linking agent while the other reactive part of the said cross linking agent reacts with the chitosan. This process realises a chemical bonding between the cross-linked chitosan coating and the polymer surface.

**Detailed description of the invention**

According to the invention there is provided a substrate material having at least one surface on which chitosan has been immobilised so as to be substantially resistant to leaching and having a strong anti-microbial activity and reduced oxygen permeability. By applying an atmospheric dielectric barrier discharge plasma or its downstream afterglow, in a controlled atmosphere comprising a carrier gas and a precursor different from said carrier gas, as described in this invention, specific functionalization can be processed on any kind of material. The preferred materials are metals and polymers and polyolefins in particular since these materials are most common in food packaging.

According to a first embodiment, any suitable combination of a carrier gas and a chemical pre-cursor can be used, with the exception of a combination of a carrier gas comprising nitrogen and a chemical pre-cursor comprising ammonia. According to that first embodiment, nitrogen may be used in combination with any pre-cursor other than ammonia, or ammonia may be used in combination with any carrier gas other than nitrogen. According to a second embodiment, a suitable carrier gas or gas mixture, e.g. comprising nitrogen, is applied in combination with a precursor selected from the group consisting of: carboxy acid functionalized organic compounds, primary amino functionalized organic compounds, secondary amino functionalized organic compounds, carboxyanhydride functionalized organic compounds, carboxy acid functionalized siloxanes, primary amino functionalized siloxanes, secondary amino functionalized siloxanes, carboxyanhydride functionalized siloxanes or any mixture thereof. According to a third embodiment, the carrier gas is selected from the group consisting of : helium, argon, air, carbon dioxide, oxygen, $SF_6$, $CF_4$ or any mixture thereof in combination with a suitable chemical precursor, e.g. ammonia. According to a fourth embodiment, the carrier gas is selected from the group consistinig of nitrogen, helium, argon, air, carbon dioxide, oxygen, $SF_6$, $CF_4$ or any mixture thereof, and the chemical pre-cursor is selected from the group consisting of carboxy acid functionalized organic compounds, primary amino functionalized organic compounds, secondary amino functionalized organic compounds, carboxyanhydride functionalized organic compounds, carboxy acid functionalized siloxanes, primary amino functionalized siloxanes, secondary amino functionalized siloxanes, carboxyanhydride functionalized siloxanes or any mixture thereof.

It has been found that chitosan may be immobilised on a material surface so as to be resistant to leaching and have a strong anti-microbial activity by applying a chitosan solution to a material surface which has been functionalized with either amino groups, carboxylic acid groups or a combination of both, using an atmospheric pressure dielectric barrier discharge or its downstream afterglow.

The addition of chitosan to the functionalized surface may be carried out by coating said surface with an acidic solution of chitosan or one of its derivatives and a cross linking agent for chitosan and the functionalized surface, and then drying the coated film. Bifunctional compounds which ensure bonding with both the functionalized polymer surface and chitosan or one of its derivatives are chosen as cross-linking agent. According to a preferred embodiment, solutions of chitosan in dilute acetic acid are used. Aldehydes are known cross linking agents for chitosan and surfaces functionalized with amino groups and such aldehydes include monoaldehydes, such as formalin, acetoaldehyde, propionaldehyde and butyric aldehyde, polyaldehydes, such as glyoxal, glutaraldehyde and dialdehyde starch. Carbodiimides like are cross linking agents which can be used as carboxyl activating agents for amide bonding with primary amines. Other cross linking agents include phosphine derivates like e.g. tris(hydroxymethyl)phosphine, diamines like e.g. hexamethylenediamine and ethylenediamine, siloxanes, epichlorohydrin, cyanamide and N-hydroxysuccinimide. The preferred cross linking agent of the invention is glutaraldehyde due to its reliability and ease of use.

The invention is equally related to a process for producing a material on which chitosan has been immobilised, wherein the material is plasma-functionalized prior to applying chitosan, said plasma-assisted functionalization taking place in an atmospheric pressure dielectric barrier discharge or its downstream afterglow.

According to the preferred embodiment, the invention is related to a process for forming immobilised chitosan on a surface in which the chitosan is applied to a surface which has been functionalized with eihter amino or carboxylic acid groups in a dielectric barrier discharge reactor or its downstream afterglow provided with two parallel electrodes at atmospheric pressure in the presence of a carrier gas and/or any chemical precursor capable of introducing amino or carboxilic acid groups onto a polymeric surface, either by surface activation or thin film deposition. In a preferred form of the process, nitrogen flows through the reactor during activation at about 20 1/min and butylamine is atomized or vaporized and added to the plasma which is generated in the reactor. According to an alternative embodiment, acetic acid is used instead of butylamine. In that case, the preferred cross-linking agent is cyanamide.

It has been found that when the electrodes in the reactor are separated by a distance of 2 mm, and an AC field is applied to them so as to produce a plasma discharge with a power of $0.5 W/cm^2$, a functionalized surface is produced which when treated with an acidic solution of chitosan containing a cross-linking agent converts the surface into one carrying immobilised chitosan in a form both resistant to leaching and having anti-microbial properties.

It has been found that a surface on which chitosan has been immobilised by the process of the present invention has excellent oxygen barrier properties enhancing the use of polymeric materials with such a surface for food packaging.

The invention is equally related to a food package having anti-microbial properties associated with a low oxygen transmission, said package being formed from a polymeric material on at least one surface of which chitosan has been immobilised so as to be substantially resistant to leaching.

The invention also includes a polymeric material and packages made therefrom which meet the requirements stipulated with regards to leaching in Directive 2002/72 EC relating to plastic materials designed to come into contact with foodstuffs.

## Description of a preferred embodiment of the invention

The following example illustrates but does not limit the invention. The materials used in forming an immobilised chitosan coating on polypropylene were sourced as follows:

Chitosan, medium molecular weight, was obtained from Aldrich Chemical Company, Inc., Milwaukee, WI, USA. Glutaraldehyde, 25% solution was obtained from Merck-Schuchardt, Hohenbrunn, Germany. Biaxially oriented polypropylene (BOPP) films (thickness 25 pm) were from UCB Films, United Kingdom.

*Plasma functionalization*

Plasma assisted functionalization was carried out in a dielectric barrier discharge (DBD)-reactor at atmospheric pressure. The configuration consists of two parallel electrodes ($20 \times 25$ cm) covered with a dielectric material, in this case glass. The inter-electrode distance was set at 2 mm and samples of BOPP film were placed on the lower electrode. Standard purity nitrogen was used as inert carrier gas. The flow rate was controlled by mass flow controllers and set at 20 1/min. During activation, atomized or vaporized butylamine was added to the nitrogen flow. An AC-field with a frequency of 1.5 kHz, generated by a 1 kW AC power supply was applied to the electrodes, giving rise to a atmospheric pressure dielectric discharge with a power density of $0.5 W/cm^2$. The functionalization was carried out for 0.5 min.

*Chitosan addition*

Chitosan (1% w/v) was dissolved in 0.1 M acetic acid by stirring on a magnetic stirrer for two days. 0.1% glutaraldehyde was added after which the solution was immediately applied onto BOPP film samples . Drying of the films was performed at 80 C for two hours.

*Water uptake*

Film samples were completely dried in desiccator at room temperature. After the dry weights were registered, the samples were placed in 75% relative humidity attained using saturated sodium chloride solution. After the samples had reached the equilibrium state, the weights were measured again and the following equation was used to calculate the water uptake (W):

$$W = \frac{W_h - W_d}{W_d}$$

(1

where $W_h$ represents the weight of the sample after high humidity (75% RH) conditioning and $W_d$ is the weight of the dry sample.

*Oxygen transmission determination*

Measurements for the samples were performed with Ox-Tran 2/20 Oxygen Transmission Rate System (Mocon, Modern Controls, Inc., USA) using the method described in the standard ASTM D3985-81. Tests were carried out at 23 °C temperature and 50 % relative humidity using air as test gas. Aluminium foil masks, with an inner diameter area of 5 cm$^2$, were used to mount test pieces in the diffusion cell.

*Migration test*

Migration tests were carried out as described in European prestandard ENV 1186-3 'Materials and articles in contact with foodstuffs - Plastics - Part 3: Test methods for overall migration into aqueous food simulants by total immersion'. 3% acetic acid and 95% ethanol were used as food simulants in test conditions of 10 days at 40 °C. Iso-octane, which can be used as an alternative fatty food simulant, was used in conditions of 2 hours at 20 °C. Tests were performed by immersing test specimens in food simulant, after which the simulant was evaporated to dryness and the overall mass of the residue was determined.

*Antimicrobial activity*

The antimicrobial activity of the coated films against *Escherichia coli* (ATCC 11775) was measured using the antimicrobial drop test. *E. coli* culture cultivated in TSB (EBL) for 24 h 37 °C was diluted into sterile peptone-saline to contain approximately $1 \times 10^6$ cfu/ml. The samples were cut into $1.5 \times 1.5$ test pieces and each piece was placed into a Petri dish. 0.1 ml of bacterial suspension was placed on each test piece. The Petri dishes were placed on a tray containing a wetted paper sheet, covered with a lid and incubated for 24 h at 30 °C. After incubation 5 ml of peptone-saline was added in the Petri dishes and the bacteria were washed from the test pieces by shaking (Infoss AG CH 4103 orbital shaker, 100 rpm) for 5 min at 25 °C. The number of surviving bacteria was measured by plating on typticase soy agar plates and incubating for 24 h at 37 °C.
The results of the above determinations are given in the tables below where:

Table 1 sets out the result of determining the amount of immobilized chitosan on BOPP films. The amounts of chitosan immobilized on the surface before and after plasma assisted surface functionalization in a dielectric barrier discharge at atmospheric pressure were determined. Also the effect of the presence of a cross linking agent in the chitosan solution which is applied on the surface after functionalization with a dielectric barrier discharge at atmospheric pressure is measured.

Table 1. Amount of immobilized chitosan on BOPP films.

| Coating solution | Chitosan g/m$^2$ | |
|---|---|---|
| | BOPP (without plasma) | BOPP (N$_2$-pasma + butylamine) |
| 1% chitosan in 0.1 M acetic acid | 0.09 | 0.22 |
| 1% chitosan in 0.1 M acetic acid + 0.1% glutaraldehyde | 0.50 | 1.61 |

Table 2 shows that the water uptake of BOPP films slightly increased because of immobilized chitosan. BOPP, as other synthetic polymers, is hydrophobic, whereas the cationic polysaccharide structure of chitosan is very hydrophilic. In this case, the addition of glutaraldehyde probably formed a cross-linked chitosan coating, which was only swollen but not dissolved by the water absorption.

Table 2. Water uptake of BOPP films.

| Film | Water uptake % |
|---|---|
| BOPP (without plasma) | 0 |
| BOPP (N$_2$-plasma + butylamine) | 0 |
| BOPP (N$_2$-plasma + butylamine) + 1% chitosan in 0.1 M acetic acid + 0.1% glutaraldehyde | 0.01 |

Table 3 shows how oxygen transmission rates fell from 1479 to 165 cm$^3$/(m$^2 \cdot$24 h) because of chitosan forming an oxygen barrier.

Table 3. Oxygen transmission (OTR) of BOPP films.

| Film | OTR cm$^3$/(m$^2 \cdot$24 h) |
|---|---|
| BOPP (without plasma) | 1479 |
| BOPP (N$_2$-plasma + butylamine) | 1462 |
| BOPP (N$_2$-plasma + butylamine) + 1% chitosan in 0.1 M acetic acid + 0.1% glutaraldehyde | 165 |

Table 4 lists the results obtained in measuring total migration which confirmed that the cross-linked chitosan was permanently immobilized onto BOPP without any significant leaching. The amounts of dissolved substances in 3% acetic acid, 95% ethanol and iso-octane were below 2 mg/dm$^2$. This means that the material met the requirements set for the total migration of substances migrated from the packaging materials into foodstuffs stipulated in Directive 2002/72/EC.

Table 4. Overall migration of BOPP films in three different simulants expressed as mg/dm$^2$.

| Coating solution | Overall migration Mg/dm$^2$ | | |
|---|---|---|---|
| | iso-octane 2 h at 20°C | 3% acetic acid 10 days at 40°C | 95% ethanol 10 days at 40 °C |
| BOPP (without plasma) | <1 | 1 | <1 |
| BOPP (N$_2$-plasma + butylamine) | <1 | <1 | <1 |
| BOPP (N$_2$-plasma + butylamine) 0.1% glutaraldehyde + chitosan[a] | + 1 | <1 | 1 |
| [a]Chitosan (1%) in 0.1 M acetic acid | | | |

## Claims

1. A process for immobilizing chitosan on a material, comprising the steps of:

   - generating a controlled atmosphere comprising a carrier gas and a chemical precursor different from the carrier gas,
   - generating a dielectric barrier discharge plasma at atmospheric pressure in said controlled atmosphere,
   - providing said material,
   - chemical functionalization of said material by exposing it to said dielectric barrier discharge or its downstream afterglow at atmospheric pressure,
   - applying a solution containing chitosan and a cross-linking agent to the functionalized material.

2. The process according to claim 1, wherein the chemical precursor is selected from the group consisting of: carboxy acid functionalized organic compounds, primary amino functionalized organic compound, secondary amino functionalized organic compounds, carboxyanhydride functionalized organic compounds, carboxy acid functionalized siloxanes, primary amino functionalized siloxanes, secondary amino functionalized siloxanes, carboxyanhydride functionalized siloxanes or any mixture thereof.

3. The process according to claim 1 or 2, wherein the carrier gas is selected from the group of gases consisting of: helium, argon, air, oxygen, carbon dioxide, SF$_6$, CF$_4$ or any mixture thereof.

4. The process according to claim 1, wherein the carrier gas is selected from the group of gases consisting of: nitrogen, helium, argon, air, oxygen, carbon dioxide, SF$_6$, CF$_4$ or any mixture thereof and the chemical precursor is selected from the group consisting of : carboxy acid functionalized organic compounds, primary amino functionalized organic compound, secondary amino functionalized organic compounds, carboxyanhydride functionalized organic compounds, carboxy acid functionalized siloxanes, primary amino functionalized siloxanes, secondary amino functionalized siloxanes, carboxyanhydride functionalized siloxanes or any mixture thereof.

5. The process according to any of the preceding claims, wherein the material is chosen from the group consisting of: plastic, non-woven or woven fibres, natural, synthetic or semi-synthetic fibers, cellulosic materials, metal, ceramic, powder or any composite structure thereof.

6. The process according to any of the preceding claims in which the step of applying a solution takes place by coating the functionalized surface with a solution of chitosan containing a cross linking agent, followed by the step of drying the coated film.

7. The process according to claim 6 wherein said cross-linking agent is selected from the group consisting of: monoaldehydes, polyaldehydes, carbodiimides, phosphines, phosphine derivatives, diamines, siloxanes, epichlorohydrin and N-hydroxysuccinimide.

8. The process according to any of the preceding claims, wherein the plasma discharge takes place in a reactor comprising parallel or concentric electrodes, and wherein the electrodes in the reactor are separated by a distance of 0.5 to 10 mm and an AC field is applied to them so as to produce a plasma discharge.

9. The process according to any of the preceding claims, wherein said carrier gas is nitrogen and said chemical precursor is butylamine.

10. The process according to any one of the preceding claims, wherein said solution is formed by dissolving chitosan in dilute acetic acid.

11. The process according to any of the preceding claims, wherein said cross-linking agent is glutaraldehyde.

12. The process according to any of the preceding claims, wherein said material is a polymer film.

13. The process according to claim 12, wherein said polymer film is a biaxially orientated polypropylene film.

14. A material substrate on at least one surface of which chitosan has been immobilized according to the process claimed in claim 1 to 13, having anti-microbial properties and reduced oxygen permeability.

15. A substrate according to claim 14 which is a biaxially oriented polypropylene foil.

16. A food package material made from a polymer material according to claim 14 having anti-microbial and improved oxygen barrier properties.

**European Patent Office** **EUROPEAN SEARCH REPORT**

Application Number

EP 06 11 4108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2006/053403 A (VITO [BE]; VALTION TEKNILLINEN [FI]; PAULUSSEN SABINE [BE]; VANGENEUGD) 26 May 2006 (2006-05-26) * claims * | 1,5-8, 10-16 | INV. C08J7/04 C08J7/12 B05D3/10 B05D3/14 B65D81/24 B65D81/28 |
| A | WO 2005/019315 A (DU PONT [US]; SABESAN SUBRAMANIAM [US]) 3 March 2005 (2005-03-03) * example 3 * | 1-16 | |
| X | VARTIAINEN J ET AL: "SURFACE MODIFICATION OF ATMOSPHERIC PLASMA ACTIVATED BOPP BY IMMOBILIZING CHITOSAN" POLYMER BULLETIN, SPRINGER, HEIDELBERG, DE, vol. 54, no. 4/5, 13 May 2005 (2005-05-13), pages 343-352, XP008068521 ISSN: 0170-0839 * abstract * | 1-8, 10-16 | |
| A | WO 03/011355 A (SOFRADIM PRODUCTION [FR]; LEFRANC OLIVIER [FR]; AVRAMOGLOU THIERRY [FR] 13 February 2003 (2003-02-13) * claims * | 1-16 | TECHNICAL FIELDS SEARCHED (IPC) C08J B05D C08L |
| A | GYE HWA SHIN ET AL: "PREPARATION OF PLASTIC AND BIOPOLYMER MULTILAYER FILMS BY PLASMA SOURCE ION IMPLANTATION" JOURNAL OF AGRICULTURAL AND FOOD CHEMISTRY, AMERICAN CHEMICAL SOCIETY. WASHINGTON, US, vol. 50, no. 16, 2002, pages 4608-4614, XP008062551 ISSN: 0021-8561 * abstract * | 1-16 | |

-/--

The present search report has been drawn up for all claims

| Place of search | Date of completion of the search | Examiner |
|---|---|---|
| The Hague | 8 November 2006 | Mazet, Jean-François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Application Number

EP 06 11 4108

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROCHERY M ET AL: "FTIR & ATR ANALYSES ON A POLYPROPYLENE (PP) SURFACE AFTER PLASMA TREATMENT IN THE STUDY OF CHITOSAN SURFACE GRAFTING TO IMPROVE PP DYEING BEHAVIOUR" MACROMOLECULAR SYMPOSIA, WILEY VCH VERLAG, WEINHEIM, DE, vol. 119, 1997, pages 277-282, XP008062697 ISSN: 1022-1360 * abstract * | 1 | |

TECHNICAL FIELDS SEARCHED (IPC)

The present search report has been drawn up for all claims

| Place of search | Date of completion of the search | Examiner |
|---|---|---|
| The Hague | 8 November 2006 | Mazet, Jean-François |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 4108

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2006

| Patent document cited in search report | | Publication date | Patent family member(s) | | Publication date |
|---|---|---|---|---|---|
| WO 2006053403 | A | 26-05-2006 | NONE | | |
| WO 2005019315 | A | 03-03-2005 | EP | 1656416 A1 | 17-05-2006 |
| | | | KR | 20060081699 A | 13-07-2006 |
| WO 03011355 | A | 13-02-2003 | AT | 298591 T | 15-07-2005 |
| | | | DE | 60204893 D1 | 04-08-2005 |
| | | | DE | 60204893 T2 | 04-05-2006 |
| | | | EP | 1418956 A1 | 19-05-2004 |
| | | | ES | 2242064 T3 | 01-11-2005 |
| | | | FR | 2827799 A1 | 31-01-2003 |
| | | | JP | 2004535898 T | 02-12-2004 |
| | | | US | 2004249438 A1 | 09-12-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0369787 A
- US 6746762 B
- JP 62138767 A
- JP 2002297559 A
- BE 200500164 W

**Non-patent literature cited in the description**

- *J.Phys. D: Appl Phys.,* 2001, vol. 34, 2761-6768